# EUROPÄISCHE PATENTANMELDUNG

(11) **EP 0 928 122 A2**
(43) Veröffentlichungstag der Anmeldung: **07.07.1999**
(21) Anmeldenummer: 98122454.6
(22) Anmeldetag: 26.11.1998
(51) Int. Cl.: H04Q 11/04

(54) **Vorrichtung zum Bilden einer Prüfschleife für eine Festverbindung mit So-Schnittstelle**

(30) Priorität: 31.12.1997 DE 19758274
(71) Anmelder: Deutsche Telekom AG, 53113 Bonn (DE)
(72) Erfinder: Kessler, Steffen Dipl.-Ing., 57299 Burbach (DE)

(57) **Zusammenfassung**

Die Erfindung betrifft eine Vorrichtung (10) zum Bilden einer Prüfschleife für eine Festverbindung mit einer S₀-Schnittstelle (20) in einem digitalen Netz.

Der Erfindung liegt die Aufgabe zugrunde, Zeit und Kosten für die Einmessung, Freigabe und Entstörung einer Festverbindung zu reduzieren.

Dazu schlägt die Erfindung eine Vorrichtung (53) zum Bilden einer Prüfschleife für eine Festverbindung mit einer S₀-Schnittstelle in einem digitalen Netz vor, die eine Anschlußeinrichtung (52) zum steckbaren Anschalten der Vorrichtung an die S₀-Schnittstelle (20) einer Netzabschlußeinrichtung (10), eine Einrichtung (54) zum Anpassen der S₀-Schnittstelle (20) an eine symmetrische Schnittstelle (55) mit zwei unidirektionalen Datenleitungen (56, 57) und eine steuerbare Schalteinrichtung (58) zum Verbinden der beiden Datenleitungen, um die Prüfschleife zu schließen, aufweist.

## Beschreibung

Die Erfindung betrifft eine Vorrichtung zum Bilden einer Prüfschleife für eine Festverbindung mit S₀-Schnittstelle in einem digitalen Netz nach Anspruch 1.

Zum Einmessen und Entstören einer zwischen zwei Teilnehmer eines digitalen öffentlichen Netzes geschalteten Standardfestverbindung waren bisher immer zwei Service-Techniker erforderlich, die bei jedem Teilnehmer ein Meßgerät an die zu prüfende Festverbindung einschleifen mußten, um einen Bitfehlerraten-Test durchzuführen. Mit Hilfe des Bitfehlerraten-Tests können Fehler auf der Standardfestverbindung festgestellt werden. Ein Nachteil bei einer solchen Ende-Ende-Messung einer Standardfestverbindung ist darin zu sehen, daß zwei Service-Techniker benötigt werden, was nicht nur zeitaufwendig sondern auch teuer ist.

Der Erfindung liegt daher die Aufgabe zu Grunde, eine Vorrichtung zum Bilden einer Prüfschleife für eine Festverbindung mit einer S₀-Schnittstelle in einem digitalen Netz zu schaffen, bei dem ein einziger Monteur auf einfache und kostengünstige Weise eine Standardfestverbindung einrichten, einmessen und übergeben kann.

Ausgangspunkt der Erfindung ist die Tatsache, daß die durch eine Netzabschlußeinrichtung, auch NT oder Network Termination genannt, zu übertragenden Daten nicht unmittelbar über die in der Netzabschlußeinrichtung implementierte S₀-Schnittstelle geschleift werden können. Die Ursache liegt darin, daß die S₀-Schnittstelle zur Richtungstrennung der zu übertragenden Daten zwei Doppeladern verwendet, und zwar eine für die abgehenden (d. h. in der Richtung von der Netzabschlußeinrichtung zu einem Endgerät fließenden) und eine für die ankommenden (d. h. in Richtung vom Endgerät zur Netzabschlußeinrichtung fließenden) Daten, wobei die Rahmen für die ankommenden und abgehenden Daten auf den beiden Doppeladern unterschiedlich aufgebaut sind. So enthält beispielsweise der Rahmen für abgehende Daten einen Echokanal, über den ein Endgerät signalisiert bekommt, daß es im Augenblick aktiv auf die Netzabschlußeinrichtung zugreift. Ein solcher Echokanal ist in einem Rahmen für ankommende Daten nicht enthalten. Eine direkte Verbindung der beiden Doppeladern zur Bildung einer Prüfschleife für die zu prüfende Festverbindung scheidet damit aus.

Der Kerngedanke der Erfindung ist also darin zu sehen, aufzuzeigen, wie die zu übertragenden Daten (B1-, B2- und D-Kanal) der S₀-Schnittstelle geschleift werden können.

Die der Erfindung zugrunde liegende Aufgabe wird mit den Merkmalen des Anspruchs 1 gelöst.

Die erfindungsgemäße Vorrichtung weist dazu eine Anschlußeinrichtung zum steckbaren Anschalten der Vorrichtung an die S₀-Schnittstelle einer Netzabschlußeinrichtung auf. Bei dieser Anschlußeinrichtung kann es sich um einen sogenannten RJ45-Stecker, auch Western-Stecker genannt, handeln. Um Daten durch die S₀-Schnittstelle schleifen zu können, ist eine Einrichtung zum Anpassen der S₀-Schnittstelle an eine symmetrische Schnittstelle mit zwei unidirektionalen Datenleitungen vorgesehen. In der gesamten Beschreibung und in den beiliegenden Ansprüchen wird unter einer symmetrischen Schnittstelle eine Schnittstelle verstanden, bei der der Rahmenaufbau für abgehende und ankommende Daten gleich ist. Im Unterschied dazu kann in diesem Sinne die S₀-Schnittstelle als unsymmetrische Schnittstelle betrachtet werden. Dank der symmetrischen Schnittstelle ist es möglich, deren beide unidirektionalen Datenleitungen zur Bildung einer Prüfschleife miteinander zu verbinden. Das bewirkt eine Schleifenbildung der Daten der S₀-Schnittstelle. Zur Schleifenbildung selbst ist eine steuerbare Schalteinrichtung vorgesehen, die die beiden Datenleitungen miteinander verbindet. Um einen richtigen Betrieb der Vorrichtung sicherzustellen, wird die Schalteinrichtung erst geschlossen, wenn die S₀-Schnittstelle und die symmetrische Schnittstelle nach einer an sich bekannten Aktivierungsprozedure aktiviert worden sind, d. h. für zu übertragende Daten transparent und synchronisiert sind.

Vorteilhafte Weiterbildungen der Erfindung sind in den Unteransprüchen angegeben.

Die zur Versorgung der Anpassungseinrichtung, der symmetrischen Schnittstelle und der steuerbaren Schalteinrichtung benötigte Spannung kann aus der Fernspeisung gewonnen werden. Dazu weist die erfindungsgemäße Vorrichtung eine Einrichtung zum Auskoppeln der an die S₀-Schnittstelle angelegten Speisespannung sowie eine Spannungsversorgungseinrichtung auf, die die ausgekoppelte Spannung auf den zur Speisung der Schalteinrichtung, der Anpassungseinrichtung und der symmetrischen Schnittstelle benötigten Gleichspannungswert transformiert. Als Schalteinrichtung kann ein elektrisch ansteuerbares Relais verwendet werden, dessen Kontakt die beiden unidirektionalen Datenleitungen der symmetrischen Schnittstelle verbindet oder trennt. Alternativ kann als Schalteinrichtung ein logisches Gatter, insbesondere ein UND-Gatter verwendet werden, dessen erster Eingang mit der einen Datenleitung verbunden ist, dessen zweiter Eingang mit einer Freigabeleitung und dessen Ausgang mit der anderen Datenleitung verbunden ist. Über die Freigabeleitung wird eine logische 1 an das UND-Gatter angelegt, nachdem die S₀-Schnittstelle und die symmetrische Schnittstelle aktiviert worden sind.

Die symmetrische Schnittstelle kann beispielsweise durch die an sich bekannte IOM-Schnittstelle realisiert sein.

Vorzugsweise ist die Vorrichtung in einem Gehäuse implementiert.

Um auf einfache Weise feststellen zu können, ob ein Teilstück der Festverbindung, d. h. zwischen einer Vermittlungsstelle und einer Netzabschlußeinrichtung, physikalisch durchgeschaltet ist, ist eine Anzeigeeinrichtung an den Ausgang der Spannungsversorgungseinrichtung angeschlossen. Die Anzeigeeinrichtung, insbesondere eine Leuchtdiode, spricht an, wenn sie die von der Vermittlungsstelle kommende Speisespannung empfängt, und signalisiert damit, daß das Teilstück der Festverbindung durchgeschaltet ist.

Eine weitere Anzeigeeinrichtung kann an die Freigabeleitung des UND-Gatters angeschlossen sein und signalisieren, daß ein Teilstück der Festverbindung aktiviert ist, d. h daß die an sich bekannte Aktivierungsprozedur zwischen der Vermittlungsstelle und der Netzabschlußeinrichtung erfolreich beendet worden ist.

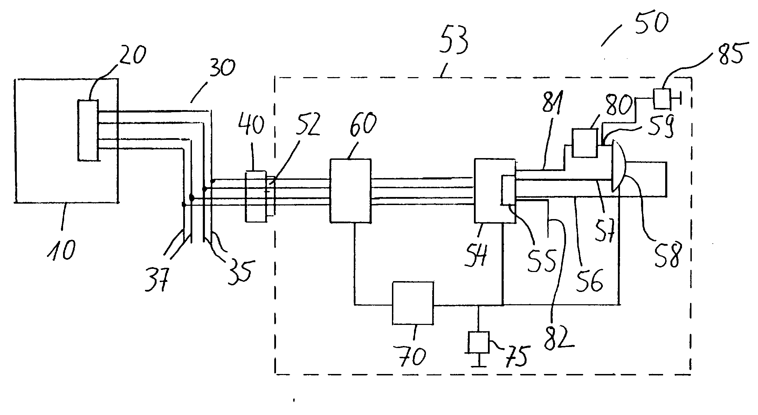

Die Erfindung wird nachstehend an Hand der beiliegenden Figur näher erläutert.

Die Figur zeigt schematisch eine an sich bekannte Netzabschlußeinrichtung 10, wie sie beispielsweise bei einem Kunden installiert ist. Es sei angemerkt, daß die Netzabschlußeinrichtung 10 stark vereinfacht dargestellt ist und nur die für das Verständnis der Erfindung notwendigen Merkmale eingezeichnet sind. So enthält die Netzabschlußeinrichtung 10 unter anderem eine S₀-Schnittstelle 20, von der ein S₀-Bus 30 abgeht. In an sich bekannter Weise umfaßt der S₀-Bus 30 zwei Doppeladern, von denen die eine Doppelader 35 Daten von der Netzabschlußeinrichtung 10 zu einer nicht dargestellten Endeinrichtung und die zweite Doppelader 37 Daten von der nicht dargestellten Endeinrichtung zur Netzabschlußeinrichtung 10 überträgt. Über eine ISDN-Netzanschlußdose 40, kurz IAE-Anschlußdose genannt, kann die Endeinrichtung, oder, wie dies in unserem Beispiel gezeigt ist, ein erfindungsgemäßer Schleifenstecker 50 an den S₀-Bus 30 und somit an die S₀-Schnittstelle 20 angeschaltet werden. Dazu weist der Schleifenstecker 50 einen entsprechenden Stecker 52 auf, der auch unmittelbar in die Netzabschlußeinrichtung 10 eingesteckt werden kann. Der Stecker 52 kann unmittelbar an einem Gehäuse 53 befestigt sein, das den Schleifenstecker 50 aufnimmt. Alternativ dazu kann der Stecker 52 über eine Anschlußschnur aus dem Gehäuse 53 des Schleifensteckers 50 herausgeführt sein. Ferner weist der Schleifenstecker 50 eine Anpassungs- oder Umsetzeinrichtung 54 auf, die auch als S-Bus-Konverter bekannt ist. Der an sich bekannte S-Bus-Konverter 54 paßt die Doppeladern 35, 37 der unsymmetrischen S₀-Schnittstelle 20 an eine symmetrische Schnittstelle mit zwei Datenleitungen 56 und 57 an. Vorzugsweise handelt es sich bei der symmetrischen Schnittstelle 55 um die IOM-Schnittstelle (IOM von ISDN-Oriented Modular) von Siemens, die neben den beiden Datenleitungen 56 und 57 standardmäßig eine allgemein mit 82 bezeichnete Rahmentakt- und Bittaktleitung besitzt, wobei die beiden Taktleitungen 82 erfindungsgemäß jedoch nicht benötigt werden, und daher aus der IOM-Schnittstelle 55 frei herausgeführt sind, wie in der Figur dargestellt. Die beiden Taktleitungen 82 können jedoch zur Erkennung der Aktivierung der Netzabschlußeinrichtung 10 verwendet werden, um die Bildung einer Schleife auf der IOM-Schnittstelle auszulösen. Bei der Umsetzung der Daten von der S₀-Schnittstelle 20 auf die IOM-Schnittstelle 55 muß eine Synchronisation gewährleistet sein. Diese Aufgabe übernimmt der S-Bus-Konverter 54, der hierzu auf den TE-Modus (Terminal Equipment) eingestellt ist, um die Takte für die IOM-Schnittstelle (54) vorzugeben. Die Datenleitung 57 der IOM-Schnittstelle 55 ist an den ersten Eingang eines als UND-Gatter 58 implementierten Schalters geschaltet. Der zweite Eingang des UND-Gatters 58 ist über eine Steuer- oder Freigabeleitung 59, ein Tiefpaßfilter 80 und eine Pulstaktleitung 81 mit dem S-Bus-Konverter 54 verbunden ist, wohingegen der Ausgang des UND-Gatters mit der Datenleitung 56 verbunden ist. Der S-Bus-Konverter 54 erzeugt, wie nachfolgend noch erläuter wird, nach Ablauf einer Aktivierungsprozedur zwischen der Netzabschlußeinrichtung 10 und S₀-Schnittstelle 20 sowie der IOM-Schnittstelle 55 auf der Pulstaktleitung 81 ein Taktsignal mit einer Frequenz von 512 kHz. Zur Energieversorgung des S-Bus-Konverters 54, der IOM-Schnittstelle 55 sowie des UND-Gatters 58 ist eine an sich bekannte Auskopplungsschaltung 60 dem S₀-Bus-Konverter 54 vorgeschaltet, der beispielsweise mit Hilfe einer Phantomschaltung die an die S₀-Schnittstelle 20 der Netzabschlußeinrichtung 10 angelegte Speisespannung auskoppelt und einer Spannungsversorgungseinrichtung 70 zuführt. Die Speisespannung beträgt 40 V. Die Spannungsversorgungseinrichtung 70 weist einen Gleichrichter und einen Spannungsregler auf, der die ausgekoppelte Speisespannung auf eine Gleichspannung von 5 V regelt. Die von der Spannungsversorgungseinrichtung 70 gelieferte Betriebsspannung wird dann dem S-Bus-Konverter 54 und dem Schalter 58 zugeführt. Vorzugsweise wird die Betriebsspannung auch einer an die Spannungsversorgungs-Einrichtung 70 angeschalteten Leuchtdiode 75 zugeführt, die nur dann aufleuchtet, wenn das Teilstück der Festverbindung zwischen der Netzabschlußeinrichtung 10 und einer nicht dargestellten Verstärkerstelle physikalisch verbunden ist. Damit kann ein Monteur auch ohne Meßgerät am Ort des Teilnehmers den Zustand des geschalteten Teilstücks der Festverbindung auf einfache Weise prüfen. Eine an die Freigabeleitung 59 angeschlossene Leuchtdiode 85 dient dazu, zu erkennen, ob die Aktivierungsprozedur zwischen der Netzabschlußeinrichtung 10 und der IOM Schnittstelle 55 erfolgreich abgeschlossen worden ist.

Nachfolgend wird die Funktionsweise des Schleifensteckers 50 kurz erläutert. Es sei angenommen, daß zwischen zwei Teilnehmern A und B eine Festverbindung eingerichtet werden soll. Hierzu wird zunächst die Festverbindung zwischen den Teilnehmern A und B von einer Montage-Gruppe hergestellt. Bisher war es notwendig, daß nach Herstellung der Festverbindung zu einem vereinbarten Termin zu beiden Teilnehmern A und B jeweils ein Service-Techniker fahren mußte, um jeweils vor Ort mit einem Meßgerät die Festverbindung mittels des Bitfehlerratentests zu überprüfen. Dank des erfindungsgemäßen Schleifensteckers 50 ist der Einsatz von zwei Service-Technikern nun nicht mehr erforderlich. Vielmehr können bereits die Monteure selbst die Festverbindung einmessen und übergeben. Der erste Monteur kann dazu beim Teilnehmer A das erste Teilstück der Festverbindung zwischen der Netzabschlußeinrichtung 10 und einer Verstärkerstelle schalten und einmessen und danach den Schleifenstecker 50 an die Netzabschlußeinrichtung 10 über den Stecker 52 und die ISDN-Anschlußdose 40 anschalten. Der zweite Monteur kann danach beim Teilnehmer B das zweite Teilstück der Festverbindung schalten und anschließend die ganze Festverbindung einmessen und bei einem fehlerfreien Zustand übergeben. Damit eine Aktivierung und somit ein fehlerfreier Betrieb der S₀-Schnittstelle 20 und der IOM-Schnittstelle 55 erfolgen kann, darf das UND-Gatter 58 die Datenleitungen 57, 56 nicht sofort, sondern erst nach einer bestimmten Zeit nach dem Einstecken des Schleifensteckers 50 in die ISDN-Anschlußdose 40 kurzschließen, um die Prüfschleife zu bilden. Der richtige Zeitpunkt wird dadurch erkannt, daß nach Beendigung der Aktivierungsprozedur der S-Bus-Konverter 54 ein 512-kHz-Taktsignal über die Pulstaktleitung 81 an das Tiefpaßfilter 80 anlegt, das derart dimensioniert ist, daß an dessen Ausgang ein Dauersignal mit dem logischen Pegel H anliegt. Der Pegel H bewirkt, daß das UND-Gatter 58 die auf der Datenleitung 57 ankommenden Prüfdaten auf die Datenleitung 56 durchschleifen kann und daß die Leuchtdiode 85 aufleuchtet, um die erfolgreiche Beendigung der Aktivierungsprozedur anzuzeigen. Im S-Bus-Konverter 54 wird dann der Rahmen der ankommenden Daten wieder in einen für den S₀-Bus 30 geeigneten Rahmen umgesetzt. Alternativ kann die Zeitverzögerung auch durch einen Zeitgeber erzeugt werden, der beim Einstecken des Schleifensteckers 50 in die ISDN-Anschlußdose 40 beispielsweise von der Netzabschlußeinrichtung 10 aktiviert wird und nach Ablauf der Zeitverzögerung über die Freigabeleitung 59 das UND-Gatter, ein Relais oder einen Schalttransistor 58 steuert. Alternativ kann der S-Bus-Konverter 54 oder die IOM-Schnittstelle 55 ein Freigabesignal zum Schalter 58 übertragen, nachdem die automatisch zwischen der Netzabschlußeinrichtung 10, der IOM-Schnittstelle 55 und der S₀-Schnittstelle 20 auf herkömmliche Weise ablaufende Aktivierungsprozedur abgeschlossen ist. Ferner ist es denkbar, vor den Schalter 58 eine Auswerteeinrichtung (nicht dargestellt ) zu schalten, die das von der Netzabschlußeinrichtung 10 nach Beendigung der Aktivierungsprozedur in den Datenrahmen eingebettete A-Bit erkennen und daraufhin den Schalter 58 schließen kann. Erst wenn die S₀-Schnittstelle 20 und die IOM-Schnittstelle 55 aktiviert sind, können Prüfdaten über die Festverbindung übertragen werden. Nach dem Schließen des UND-Gatters 58 wird mit Hilfe des Meßgerätes beim Teilnehmer B der sogenannte Bitfehlerratentest (Bit Error Rate Test, BERT) durchgeführt. Falls der BERT-Test ohne Fehler läuft, kann der Monteur davon ausgehen, daß die Festverbindung vollständig eingerichtet ist und übergeben werden kann. Zur Sicherheit kann er den Teilnehmer A bitten, den Schleifenstecker 50 aus der ISDN-Anschlußdose 40 herauszuziehen, um sicherzustellen, daß die Messung über die gesamte Festverbindung erfolgt ist, wenn der BERT-Test nunmehr fehlerhaft arbeitet.

## Patentansprüche

1. Vorrichtung zum Bilden einer Prüfschleife für eine Festverbindung mit einer S₀-Schnittstelle in einem digitalen Netz
gekennzeichnet durch
eine Anschlußeinrichtung (52) zum steckbaren Anschalten der Vorrichtung (53) an die S₀-Schnittstelle (20) einer teilnehmerseitigen Netzabschlußeinrichtung (10),
eine Einrichtung (54) zum Anpassen der S₀-Schnittstelle (20) an eine symmetrische Schnittstelle (54) mit zwei unidirektionalen Datenleitungen (56, 57) und eine steuerbare Schalteinrichtung (58) zum Verbinden der beiden Datenleitungen (56, 57), um die Prüfschleife zu schließen.

2. Vorrichtung nach Anspruch 1, gekennzeichnet durch eine Einrichtung (60) zum Auskoppeln der an der S₀-Schnittstelle (20) angelegten Speisespannung und eine mit der Anpassungseinrichtung (54) und der Schalteinrichtung (58) verbundenen Spannungsversorgungseinrichtung (70), die die ausgekoppelte Speisespannung auf einen vorbestimmten Gleichspannungswert transformiert.

3. Vorrichtung nach Anspruch 1 oder 2, dadurch gekennzeichnet, daß die Schalteinrichtung (58) ein Relais, ein Schalttransistor oder ein logisches Gatter ist.

4. Vorrichtung nach Anspruch 3, dadurch gekennzeichnet, daß das Gatter ein UND-Gatter ist, dessen erster Eingang mit der einen Datenleitung (57) verbunden ist, dessen zweiter Eingang über eine Freigabeleitung (59) und ein Tiefpaßfilter (80) mit der Anpassungseinrichtung (54) und dessen Ausgang mit der anderen Datenleitung (56) verbunden ist.

5. Vorrichtung nach einem der Ansprüche 1 bis 4, dadurch gekennzeichnet, daß die symmetrische Schnittstelle (55) eine IOM-Schnittstelle ist.

6. Vorrichtung nach einem der Ansprüche 2 bis 5, dadurch gekennzeichnet, daß an den Ausgang der Spannungsversorgungseinrichtung (70) eine erste Anzeigeeinrichtung (75), insbesondere eine Leuchtdiode angeschaltet ist.

7. Vorrichtung nach einem der Ansprüche 4 bis 6, dadurch gekennzeichnet, daß an die Freigabeleitung eine zweite Anzeigeeinrichtung (85), insbesondere eine Leuchtdiode angeschaltet ist.
